# DEMANDE DE BREVET EUROPEEN

(11) **EP 3 718 727 A1**
(43) Date de publication de la demande: **07.10.2020**
(21) Numéro de dépôt: 19167660.0
(22) Date de dépôt: 05.04.2019
(51) Int. Cl.: B29C 33/38, B29C 33/42, B29C 33/40, B29C 43/02, B29C 43/18, B29C 35/02, B29C 37/00, B29C 59/02, B44C 1/24, B29K 19/00, B32B 38/06

(54) **RÉALISATION DE PIÈCES EN ÉLASTOMÈRE ÉLABORÉES PAR DUPLICATION, À PARTIR D'UN MODÈLE ÉTALON DE RÉFÉRENCE**

(71) Demandeur: BIWI S.A., 2855 Glovelier (CH)
(72) Inventeur: BOURQUARD, Pascal, 2854 Bassecourt (CH)
(74) Mandataire: Bovard SA Neuchâtel

(57) **Abrégé**

Réalisation d'une empreinte de moulage texturée, en particulier pour le moulage de pièces en élastomère comportant une texturation de surface. Ce procédé repose sur l'acquisition d'une texture à partir d'un modèle naturel dont on souhaite reproduire un état de surface sur une pièce en élastomère, par surmoulage dudit modèle entre deux feuilles calandrées de matière élastomère et vulcanisation pendant une durée comprise entre 20 minutes et 60 minutes à une température comprise entre 80°C et 200°C. Est divulguée également une empreinte de moulage en matière élastomère ainsi obtenue et un procédé de moulage de pièce élastomère texturé obtenue par vulcanisation dans l'empreinte d'une feuille de matière élastomère calandrée crue sur un élément de base d'une même matière élastomère partiellement vulcanisé. Est divulguée enfin une pièce élastomère texturée obtenue selon le procédé de moulage.

## Description

### Domaine technique

La présente invention se rapporte au domaine de la fabrication de pièces en élastomère. Elle concerne plus particulièrement un procédé de création d'une empreinte de moulage d'une pièce en élastomère comportant une texturation de surface, notamment une texturation de type matière naturelle ou une texturation obtenue par un savoir-faire propre.

L'invention concerne également un procédé de moulage d'une pièce en matière élastomère comportant une texturation de surface à partir d'une telle empreinte.

L'invention peut s'appliquer de manière avantageuse au domaine de l'horlogerie, du luxe, de la maroquinerie, du packaging, des displays vitrines, notamment de l'habillage ou à d'autres domaines industriels utilisant le caoutchouc ou divers élastomères.

### Etat de la technique

Il est connu de fabriquer des pièces telles que des bracelets de montre, en caoutchouc naturel ou synthétique, ou en diverses matières plastiques. Ces bracelets sont généralement réalisés par moulage, le moule comportant éventuellement des structures permettant de faire apparaître sur le bracelet des éléments graphiques, tels qu'une marque ou un logo, ou parfois encore une texture de surface locale ou plus étendue destinée à procurer un effet esthétique et/ou tactile particulier. Seul le relief permet de discerner la forme ou l'inscription, aussi bien visuellement que tactilement.

Il s'avère cependant que les procédés de moulage actuels ne permettent pas de procurer une texturation de surface locale ou entendue d'une pièce en élastomère procurant un rendu fidèle d'une texture de matériau naturel tel qu'un cuir, une plume, une peau écaillée, une écorce, etc... tel que le rendu de la pièce texturé puisse, du moins à l'oeil nu et/ou au toucher être confondu avec ledit matériau naturel.

Ceci est dû notamment au fait que les empreintes de moulage connues à ce jour ne permettent pas de reproduire suffisamment fidèlement les finesses texturales de matières naturelles, par manque de résolution des méthodes d'acquisition et/ou de reproduction de surfaces de ces matières naturelles.

En effet, les empreintes de moulage de matières élastomères sont classiquement obtenues par enlèvement de matière à l'aide de laser selon des modèles numériques obtenus par conception assistée par ordinateur ou encore par mise en forme (étampage, moulage) d'une empreinte rigide de métal ou de matière plastique résistante aux températures de vulcanisation des matières élastomères à mouler. Ces techniques ne permettent malheureusement pas de réaliser de manière industrielle, autrement que par un usinage final manuel, des états de surfaces des moules comportant des granularités de pas inférieurs au millimètre, encore moins au 10eme de millimètre. Or nombre de matières biologiques naturelles ou synthétiques tels que des plumes, peaux, poils par exemple présentent de telles variations dimensionnelles de surface, ou simplement des dimensions individuelles si réduites qu'elles ne peuvent être moulées ou reproduites fidèlement.

La présente invention a pour but de pallier les inconvénients des procédés d'obtention de pièces en élastomères texturées, telles que des bracelets, mais pas seulement, évoqués ci-dessus.

### Divulgation de l'invention

Pour atteindre ces buts, l'invention concerne un procédé dont les caractéristiques sont mentionnées dans les revendications.

Plus particulièrement l'invention concerne selon un premier objet un procédé de réalisation d'une empreinte de moulage texturée, en particulier pour le moulage de pièces en élastomère comportant une texturation de surface, comportant les étapes suivantes :
- Procurer un modèle naturel dont on souhaite reproduire un état de surface sur une pièce en élastomère ;
- Disposer le modèle naturel entre deux feuilles d'une première matière élastomère calandrée pour former un ensemble d'acquisition d'empreinte ;
- Disposer l'ensemble d'acquisition d'empreinte entre deux feuilles d'une seconde matière élastomère calandrée différente de la première matière élastomère calandrée en élastomère de manière à recouvrir l'ensemble d'acquisition d'empreinte ;
- Disposer le tout entre deux plaques de compression d'une navette d'étuvage et fermer ladite navette par serrage des deux dites plaques l'une contre l'autre de manière à comprimer les feuilles de seconde matière calandrée sur l'ensemble d'acquisition d'empreinte entre lesdites plaques ;
- Chauffer la navette d'étuvage pendant une durée comprise entre 20 minutes et 60 minutes à une température comprise entre 80°C et 200°C pour vulcaniser au moins partiellement chaque feuille de première matière élastomère calandrée et surmouler ledit modèle naturel dans une face de celles-ci ;
- Ouvrir la navette et retirer le modèle naturel d'entre les blocs d'acquisition d'empreinte pour obtenir deux empreintes de moulage texturées comprenant une feuille de première matière élastomère calandrée vulcanisée au moins partiellement vulcanisée.

Ce procédé permet ainsi de manière avantageuse de réaliser une empreinte de moule en matière élastomère souple et texturée dans la masse, permettant d'obtenir un négatif extrêmement fidèle, sans altération ni finition par usinage, de la texture de surface de n'importe quel modèle de base, naturel ou non, en vue de transférer cette texture à une pièce élastomère moulée ultérieurement, contrairement aux moules durs connus de l'art antérieur.

L'invention concerne également par ailleurs selon un second objet une empreinte de moulage souple obtenu selon ce procédé.

L'invention concerne enfin selon un troisième objet un procédé de de moulage d'une pièce de matière élastomère et une pièce élastomère obtenue selon ce procédé, lequel comporte les étapes suivantes :
a) Se doter d'une empreinte de moulage selon l'une des revendications 6 à 8,
b) Disposer une feuille de matière élastomère calandrée crue dans ladite empreinte de moulage ;
c) Disposer sur la feuille de matière élastomère calandrée crue un élément de matière élastomère pré-moulé partiellement vulcanisé ayant sensiblement la forme de la pièce que l'on souhaite obtenir, et
d) Disposer l'empreinte de moulage dans laquelle la feuille de matière élastomère crue et l'élément pré-moulé ont été superposé entre deux plaques de compression d'une navette d'étuvage et serrer les deux dites plaques l'une contre l'autre de manière à comprimer la feuille de matière élastomère crue et l'élément pré-moulé dans l'empreinte,
e) Chauffer la navette après fermeture à une température comprise entre 150°C et 220°C, de préférence entre 160°C et 200°C, pendant au moins 30 minutes pour vulcaniser la feuille de matière élastomère crue et l'élément pré-moulé ensemble pour former une pièce élastomère texturée ;
f) Séparer après cuisson la pièce élastomère texturée ainsi formée dont la face issue de la matière calandrée crue avant cuisson au contact de l'empreinte est texturée.

### Brève description des dessins

D'autres caractéristiques de la présente invention apparaîtront plus clairement à la lecture de la description qui va suivre, faite en référence aux dessins annexés, dans lesquels :
- la figure 1 représente schématiquement les différentes étapes du procédé de formation d'une empreinte de moulage selon l'invention et
- la figure 2 représente schématiquement les différentes étapes d'un procédé de moulage d'une pièce élastomère texturée à l'aide d'une empreinte obtenue selon le procédé de la figure1.

### Mode(s) de réalisation de l'invention

Dans la description qui va suivre, le procédé de réalisation d'une empreinte de moulage puis le procédé de moulage d'une pièce élastomère texturée à l'aide d'une empreinte ainsi obtenue seront notamment décrit en relation à la réalisation d'un brin de bracelet de montre. Cependant cette application ne saura être retenue comme limitative de la portée de la présente invention, qui s'appliquera indifféremment à la réalisation d'empreinte de moulage et de pièces moulées texturées en élastomère de toutes natures et pour toutes applications.

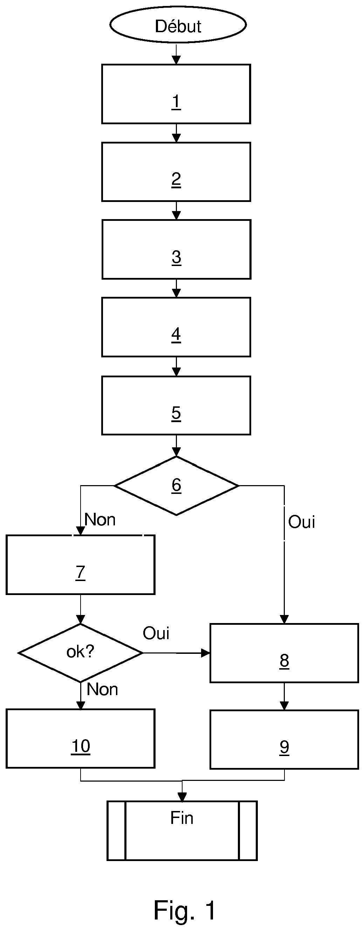

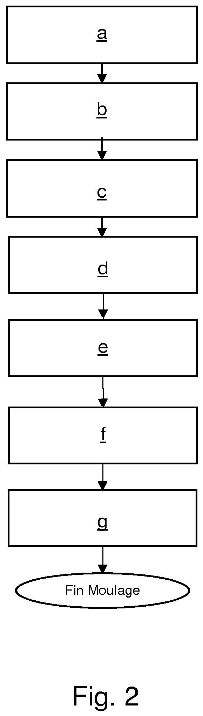

En référence tout d'abord à la figure 1, l'invention concerne selon un premier objet un procédé de réalisation d'une empreinte de moulage texturée. Par opposition avec les empreintes de moulage connues de l'art antérieur et leurs techniques de fabrication, l'invention propose la fabrication d'empreintes, c'est-à-dire de moules, souples, elles-mêmes constituées de matière élastomère, qui ont été surmoulées sur un modèle naturel afin d'en acquérir la texture dans ses moindres détails, tel un négatif, pour ensuite transférer la texture ainsi acquise à un pièce moulée d'élastomère lors d'un procédé de moulage décrit par la suite en relation de la figure 2 notamment.

La réalisation d'empreintes élastomères texturées et leur mise en oeuvre pour le moulage de pièces élastomères texturées constituent aussi des caractéristiques essentielles des procédés proposés par l'invention.

Selon la représentation synoptique donnée à la figure 1, l'invention concerne en premier lieu un procédé d'acquisition d'une empreinte de moulage texturée, en particulier pour le moulage de pièces en élastomère comportant une texturation de surface.

Préalablement à la prise d'empreinte à proprement parler, il convient d'en une première étape 1 de procurer un modèle dont on souhaite reproduire un état de surface sur une pièce en élastomère. Un tel modèle peut être de toute nature et origine et présenter un état de surface très divers mais de préférence non lisse, c'est-à-dire présentant des aspérités. Lesdites aspérités peuvent être de dimensions extrêmement réduites, en particulier de l'ordre de quelques dixièmes de millimètre de profondeur ou longueur/ largeur, comme plus grossières, de l'ordre de plusieurs millimètres, voire centimètres. Le modèle à reproduire pourra notamment de préférence être un matériau naturel de nature animale, végétale, lithographique ou autre. On pourra citer entre autres de manière non limitative : des peaux, des cuirs, des pelages, des plumes, des écorces, des roches,... etc.

Une fois le modèle sélectionné il convient ensuite dans une seconde étape 2 de disposer celui-ci entre deux feuilles d'une première matière élastomère calandrée crue pour former un ensemble d'acquisition d'empreinte par vulcanisation desdites feuilles de première matière élastomère calandrée.

L'utilisation de feuilles de matière élastomère calandrée crue, c'est-à-dire non vulcanisée et obtenue par lamination de matière élastomère pour en former des bandes et/ou feuilles calibrées est d'importance toute particulière pour le procédé de l'invention. En effet, de telles feuilles permettent d'ajuster l'épaisseur et la matière de l'empreinte réalisée en fonction du modèle choisi, sans altérer celui-ci mais en en « imprimant » parfaitement la texture de surface, par surmoulage, comme il sera décrit par la suite.

Dans le cadre de l'invention, on utilisera notamment pour la réalisation de l'ensemble d'acquisition d'empreinte des feuilles calandrées d'une épaisseur comprise de préférence entre 0,5 mm et 10 mm, de préférence encore comprise entre 1 mm et 3 mm.

Chaque feuille de première matière calandrée, calibrée vise à fournir un demi-moule souple du modèle surmoulé, demi-moule dont l'épaisseur doit être au minimum supérieure de 10% à une demi-épaisseur du modèle. Aussi l'invention, bien que non spécifiquement limitée au surmoulage de modèle d'épaisseur supérieure à 10 mm, est en pratique particulièrement adaptée pour obtenir des empreintes texturées à partir de modèles d'épaisseurs relativement faibles, inférieures au centimètre, épaisseur qui en rend particulièrement le surmoulage par des matières dures plus délicat en pratique.

La première matière élastomère constitutive de ces feuilles calandrée sera en outre choisie parmi une matière élastomère fluorée, notamment de type FKM, ou du nitrile (NBR). Un élastomère fluoré conviendra notamment pour le surmoulage et l'acquisition de texture à partir de matières relativement denses et résistantes tels des cuirs, des écorces ou des pierres alors que le nitrile sera lui plus approprié pour le surmoulage de matières fragiles et d'aspérités de surface fines tels des pelages ou des plumes.

Une fois le modèle disposé en sandwich entre deux feuilles de première matière élastomère calandrée on obtient ainsi un dit ensemble d'acquisition d'empreinte, que l'on vient ensuite dans une troisième étape 3 disposer entre deux feuilles d'une seconde matière élastomère calandrée, qui est différente de la première matière élastomère calandrée, de manière à recouvrir l'ensemble d'acquisition d'empreinte. La seconde matière élastomère calandrée doit être de nature différente de la première et est de préférence constituée d'éthylène propylène diène monomère (EPDM), crue ou partiellement vulcanisée. Une telle matière présente l'avantage de ne pas adhérer avec la première matière élastomère lors de la cuisson ultérieure de l'empreinte.

L'ensemble ainsi formé doit ensuite être passé en étuve pour cuire, et donc vulcaniser, les feuilles de première matière calandrée autour du modèle dont on souhaite acquérir une texture. Pour ce faire on dispose dans une quatrième étape 4 le dit ensemble entre deux plaques de compression d'une navette d'étuvage, que l'on ferme et serre l'une contre l'autre de manière à comprimer les feuilles l'ensemble d'acquisition d'empreinte entre lesdites feuilles de seconde matière calandrée et les plaques de la navette.

Avantageusement, les plaques de serrage de la navette comportent chacune une semelle interne de compression en silicone, lesdites semelles présentant une dureté Shore A différente, en pratique comprise de préférence entre 20° et 30° Shore A pour une première semelle et entre 40° et 50° Shore A pour une seconde semelle.

Une telle différence de dureté entre les semelles est particulièrement avantageuse car elle procure une meilleure compression de l'ensemble d'acquisition d'empreinte, donc un meilleur surmoulage du modèle dans les feuilles de première matière élastomère calandrée, par effet de poussée de la semelle la plus dure sur ledit ensemble d'acquisition d'empreinte pris dans les feuilles d'EPDM dans la semelle la moins dure.

Une fois les plaques de la navette serrées on place ensuite dans une cinquième étape 5 ladite navette en étuve afin de chauffer celle-ci et son contenu pendant une durée comprise entre 20 minutes et 60 minutes à une température comprise entre 80°C et 200°C pour vulcaniser au moins partiellement chaque feuille de première matière élastomère calandrée crue et surmouler ledit modèle dans une face de celles-ci.

Pour une majorité de matières et de modèles une cuisson de 30 à 45 minutes entre 160 °C et 200°C sera parfaitement adaptée pour obtenir une vulcanisation complète de la première matière calandrée et l'obtention de demi-moules parfaitement texturés de la surface du modèle choisi. Toutefois, pour des modèles fragiles on pourra privilégier une cuisson prolongée jusqu'à 60 min à température inférieure, comprise entre 120°C et 150°C.

Une fois la cuisson terminée, il suffit de retirer la navette de l'étuve (ou four) et d'ouvrir celle-ci dans une sixième étape 6 pour dégager les feuilles de seconde matière élastomère calandrée et dégager chaque demi-moule empreinte texturé ainsi formé autour du modèle obtenu de la première matière élastomère calandrée vulcanisée.

On vérifie alors la qualité desdites empreintes ainsi obtenue de 1ere moulée, notamment leur intégrité et qualité de texturation. En cas de défaut 7 on recommence le procédé de fabrication comme décrit précédemment à partir de nouvelles feuilles de première et deuxième matières élastomères calandrées, et bien sûr ainsi de suite jusqu'à obtention d'empreintes de qualité satisfaisante.

Une fois les empreintes satisfaisantes obtenues 8, on peut ensuite le cas échéant procéder à une étape de gravure ou finition ultérieure 9, notamment pour intégrer éventuellement certaines textures ou marquages additionnels dans l'empreinte, puis on stocke cette dernière pour une utilisation dans un procédé de moulage tel que décrit par la suite. Les empreintes moulées non satisfaisantes sont rebutées 10 et recyclées.

Une fois une empreinte texturée souple en élastomère obtenue tel que précédemment décrit l'invention propose également un procédé de moulage d'une pièce en matière élastomère, par exemple à titre non limitatif un brin de bracelet de montre, texturée selon le modèle obtenu par l'empreinte souple. Un tel procédé de moulage est représenté schématiquement à la figure 2.

Le procédé de moulage de l'invention débute (a) par la procuration d'une empreinte de moulage telle que précédemment obtenue, ainsi que d'un premier élément pré-moulé en élastomère, ayant sensiblement la forme de la pièce que l'on souhaite obtenir. Ce premier élément pré-moulé peut résulter d'un moulage précédent, par exemple, en comprimant un élastomère dans un moule ayant la géométrie souhaitée, à une température ne permettant pas à l'élastomère de vulcaniser.

Une deuxième étape du procédé consiste (b) à disposer une feuille de matière élastomère calandrée crue, c'est-à-dire non vulcanisée, dans l'empreinte de moulage, puis (c) de disposer sur celle-ci dans la dite empreinte le premier élément élastomère susvisé. La feuille de matière élastomère calandrée crue va ainsi servir à prendre la texture de l'empreinte de moulage et simultanément revêtir le premier élément élastomère lors du moulage et y être fusionner par vulcanisation comme décrit ci-après.

On notera que la feuille de matière calandrée crue et le premier élément élastomère pré-moulé peuvent être de couleurs différentes afin de créer des effets esthétiques particulier le cas échéant. Toutefois, avantageusement, la feuille de matière calandrée crue et l'élément pré-moulé seront les deux constitués d'une matière élastomère de même nature pour pouvoir être conjointement vulcanisés et procurer une liaison mécanique complète lors de la moulée. De préférence, une feuille crue et un élément pré-moulé d'éthylène propylène diène monomère (EPDM) pourront être choisis, l'élément pré-moulé étant lui partiellement vulcanisé, notamment au moins à T30 et au plus à T80 avant le début du moulage final.

L'étape suivante (d) consiste, une fois cette préparation réalisée, à disposer l'empreinte de moulage dans laquelle la feuille de matière élastomère crue et l'élément pré-moulé ont été superposés entre deux plaques de compression d'une navette d'étuvage.

Cette navette d'étuvage peut être de nature analogue à celle utilisée pour la formation de l'empreinte de moulage tel que précédemment décrite. Chaque plaque de serrage formant la navette d'étuvage pourra comporter notamment une semelle interne de compression en silicone, chacune la encore de préférence de dureté Shore A différente et dans des gammes de dureté Shore A telles que précédemment évoquées.

On insère ensuite (e) la navette dans une presse de moulage pour serrer les deux dites plaques l'une contre l'autre de manière à comprimer la feuille de matière élastomère crue et l'élément pré-moulé dans l'empreinte de moulage et on chauffe à une température comprise entre 150°C et 220°C, de préférence entre 160°C et 200°C, pendant au moins 30 minutes pour vulcaniser la feuille de matière élastomère crue et l'élément pré-moulé ensemble.

Ce chauffage peut résulter d'un chauffage par convection dans un four ou, préférentiellement, d'un chauffage par conduction des mors de presse au contact des parties métalliques des plaques de la navette. Ce second mode de chauffage s'avère en pratique le plus optimal sur le plan de la maitrise de la température de chauffage au coeur de la navette, et donc de la température de vulcanisation de la feuille de matière crue sur l'élément pré-moulé. On peut en effet, régler la chauffe selon une consigne régulée électroniquement au niveau de la presse de serrage, des thermocouples étant intégrés dans les mors de presse pour mesurer en continue la température de contact avec la navette de serrage et transmettre les mesures au dispositif électronique de commande de la presse pour ajustement éventuel de la température de chauffe en tenant compte d'un profil de chauffage souhaité en fonction des paramètres de résistance thermiques des matériaux de la navette.

Les mors de la presse de moulage appliquent lors de la moulée sur les plaques de compression de la navette d'étuvage une pression d'au moins 5 tonnes, de préférence au moins 7 tonnes, durant toute l'opération de chauffage. Une telle pression s'avère en pratique nécessaire pour assurer une bonne liaison des matériaux, sans fluage hors de l'empreinte de moulage lors de la vulcanisation de la feuille crue sur l'élément pré-moulé.

Il convient de noter par ailleurs que le moulage de plusieurs éléments pré-moulés peut être réalisé simultanément sans affecter la qualité de celui-ci. Pour cela, il suffit d'empiler, entre autant de plaques de compression que nécessaire, une pluralité d'empreintes dans chacune desquelles on aura disposé une dite feuille de matière élastomère calandrée crue et un élément pré-moulé à revêtir et texturer. Avantageusement, on peut ainsi mouler simultanément jusqu'à 6 pièces en élastomère, utilisant ainsi 6 empreintes et 7 plaques de compression, formant ainsi une navette étagée insérée entre les mors de la presse de moulage.

Dans une telle configuration multi moulées simultanées, on veillera alors à disposer avantageusement des intercalaires en silicone entre chaque plaque de compression et empreinte de moulage d'une part et l'élément pré-moulé d'autre part, ceci afin d'appliquer une pression la plus uniforme sur chaque étage de moulée.

Une fois la cuisson terminée, on ouvre ensuite la presse de moulage et on sort la navette. On sépare ensuite les plaques de compression pour accéder à la (les) pièce(s) élastomère(s) ainsi moulée(s), portant une texture conférée par transfert de l'empreinte de moulage sur la portion issue de la feuille de matière calandrée crue vulcanisée dans la masse sur l'élément pré-moulé, désormais totalement vulcanisé.

Il suffit ensuite de récupérer (f) les pièces ainsi moulées pour contrôle, ébavurage, usinage final éventuel puis conditionnement en vue d'une utilisation finale ultérieurement.

La description ci-dessus a été donnée à titre d'illustration non limitative de l'invention, dont une finalité préférée peut être de réaliser des brins de bracelet de montres en matière élastomère. L'homme du métier pourra toutefois l'adapter sans sortir de son cadre de l'invention, notamment pour réaliser divers composants de pièces d'horlogerie, telles que des inserts destinés à être logés dans des couronnes de montre, ou des parties de fonds de boites ou toutes autres pièces pouvant être réalisées en élastomères et sur lesquelles il peut être intéressant d'apposer un élément décoratif texturé.

## Revendications

1. Procédé de réalisation d'une empreinte de moulage texturée, en particulier pour le moulage de pièces en élastomère comportant une texturation de surface, comportant les étapes suivantes :
- Procurer (1) un modèle naturel dont on souhaite reproduire un état de surface sur une pièce en élastomère ;
- Disposer (2) le modèle naturel entre deux feuilles d'une première matière élastomère calandrée pour former un ensemble d'acquisition d'empreinte ;
- Disposer (3) l'ensemble d'acquisition d'empreinte entre deux feuilles d'une seconde matière élastomère calandrée différente de la première matière élastomère calandrée en élastomère de manière à recouvrir l'ensemble d'acquisition d'empreinte ;
- Disposer (4) le tout entre deux plaques de compression d'une navette d'étuvage et fermer la dite navette par serrage des deux dites plaques l'une contre l'autre de manière à comprimer les feuilles de seconde matière calandrée sur l'ensemble d'acquisition d'empreinte entre lesdites plaques ;
- Chauffer la navette d'étuvage pendant une durée comprise entre 20 minutes et 60 minutes à une température comprise entre 80°C et 200°C pour vulcaniser au moins partiellement chaque feuille de première matière élastomère calandrée et surmouler ledit modèle naturel dans une face de celles-ci ;
- Ouvrir la navette et retirer le modèle naturel d'entre les blocs d'acquisition d'empreinte pour obtenir deux empreintes de moulage texturées comprenant une feuille de première matière élastomère calandrée vulcanisée au moins partiellement vulcanisée.

2. Procédé selon la revendication 1, **caractérisé en ce que** la première matière élastomère calandrée est choisie parmi une matière élastomère fluorée, notamment de type FKM, ou du nitrile (NBR).

3. Procédé selon la revendication 1 ou 2, **caractérisé en ce que** la seconde matière élastomère calandrée est de l'éthylène propylène diène monomère (EPDM).

4. Procédé selon l'une des revendications 1 à 3, **caractérisé en ce que** les plaques de serrage de la navette comporte chacune une semelle interne de compression en silicone, lesdites semelles présentant une dureté Shore A différente.

5. Procédé selon la revendication 4, **caractérisé en ce qu'**une première semelle présente une dureté comprise entre 20° et 30° Shore A et une seconde semelle présente une dureté comprise entre 40° et 50° Shore A.

6. Empreinte de moulage obtenue par un procédé de réalisation selon l'une des revendications 1 à 5.

7. Empreinte de moulage selon la revendication 6, **caractérisée en ce qu'**elle comporte une première couche d'une première matière élastomère comportant une forme de moulage texturée et une seconde couche d'une seconde matière élastomère calandrée différente de la première vulcanisée à la première couche sur une face de celle-ci opposée à celle comportant la forme de moulage texturée.

8. Empreinte de moulage selon la revendication 6 ou 7, **caractérisé en ce que** la première matière élastomère calandrée comprend une matière élastomère fluorée, notamment de type FKM, ou du nitrile (NBR) et la seconde matière élastomère calandrée comporte de l'éthylène propylène diène monomère (EPDM).

9. Procédé de moulage d'une pièce de matière élastomère, comportant les étapes suivantes :
a. Se doter d'une empreinte de moulage selon l'une des revendications 6 à 8,
b. Disposer une feuille de matière élastomère calandrée crue dans ladite empreinte de moulage ;
c. Disposer sur la feuille de matière élastomère calandrée crue un élément de matière élastomère pré-moulé partiellement vulcanisé ayant sensiblement la forme de la pièce que l'on souhaite obtenir, et
d. Disposer l'empreinte de moulage dans laquelle la feuille de matière élastomère crue et l'élément pré-moulé ont été superposé entre deux plaques de compression d'une navette d'étuvage et serrer les deux dites plaques l'une contre l'autre de manière à comprimer la feuille de matière élastomère crue et l'élément pré-moulé dans l'empreinte,
e. Chauffer la navette après fermeture à une température comprise entre 150°C et 220°C, de préférence entre 160°C et 200°C, pendant au moins 30 minutes pour vulcaniser la feuille de matière élastomère crue et l'élément pré-moulé ensemble pour former une pièce élastomère texturée ;
f. Séparer après cuisson la pièce élastomère texturée ainsi formée dont la face issue de la matière calandrée crue avant cuisson au contact de l'empreinte est texturée.

10. Procédé selon la revendication 9, **caractérisé en ce que** la feuille de matière calandrée crue et l'élément pré-moulé sont constituées d'une matière élastomère de nature chimique similaire, de manière à pouvoir être réticulés ensemble.

11. Procédé selon la revendication 9 ou 10, caractérisé en ce la feuille de matière calandrée crue et l'élément pré-moulé sont constitués d'éthylène propylène diène monomère (EPDM).

12. Procédé selon l'une des revendications 9 à 11, **caractérisé en ce que** les plaques de compression sont maintenues l'une contre l'autre sous une pression d'au moins 5 tonnes, de préférence au moins 7 tonnes, durant l'opération de chauffage.

13. Procédé selon l'une des revendications 9 à 12, **caractérisé en ce que** l'élément pré-moulé est vulcanisé au moins à T30 et au plus à T80 avant l'étape de chauffage.

14. Procédé selon l'une des revendications 9 à 13, **caractérisé en ce que** l'on dispose des intercalaires en silicone entre une plaque de compression et l'empreinte de moulage d'une part et l'autre plaque de compression et l'élément pré-moulé d'autre part.

15. Pièce élastomère texturée obtenue selon le procédé de l'une des revendications 9 à 14.
